(19) Europäisches Patentamt
European Patent Office
Office européen des brevets

(11) EP 4 362 258 A1

(12) EUROPEAN PATENT APPLICATION
published in accordance with Art. 153(4) EPC

(43) Date of publication:
01.05.2024 Bulletin 2024/18

(21) Application number: 21951394.2

(22) Date of filing: 30.07.2021

(51) International Patent Classification (IPC):
H02J 3/00 $^{(2006.01)}$      G06Q 10/04 $^{(2023.01)}$

(52) Cooperative Patent Classification (CPC):
G06Q 10/04; H02J 3/00

(86) International application number:
PCT/CN2021/109874

(87) International publication number:
WO 2023/004804 (02.02.2023 Gazette 2023/05)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Siemens Aktiengesellschaft
80333 München (DE)

(72) Inventors:
• XIA, Yu
  Beijing 100102 (CN)
• WANG, Dehui
  Beijing 100102 (CN)

(74) Representative: Isarpatent
Patent- und Rechtsanwälte
Barth Hassa Peckmann & Partner mbB
Friedrichstraße 31
80801 München (DE)

(54) METHOD AND APPARATUS FOR OPTIMIZING OPERATION OF TRANSFORMER SUBSTATION

(57) The present invention provides a method for optimizing the operation of a transformer substation. The transformer substation comprises a plurality of transformers, and the transformers are connected or disconnected by means of switches. The optimization method comprises: acquiring the current loads of transformers among a plurality of transformers, and according to the current loads, predicting predicted loads of the respective transformers under various possible operation modes in a plurality of time periods; calculating transformer costs of the respective transformers in the plurality of time periods according to the predicted loads of the respective transformers, the transformer costs comprising transformer losses and transformer operation costs; calculating switch costs in the plurality of time periods according to purchase costs and the service life of the switches corresponding to the respective transformers; and calculating a total cost in a total time period according to the transformer costs and the switch costs, optimizing the total cost to obtain optimization parameters, and operating a transformer substation according to the optimization parameters, the total time period consisting of the plurality of time periods.

Fig. 2

EP 4 362 258 A1

**Description**

Technical Field

The present invention relates to the technical field of energy, and in particular to a method and to an apparatus for optimizing the operation of a transformer substation.

Background Art

Transformers are one of the most important and common devices in energy systems. The energy consumption of transformers accounts for a large proportion of the overall energy loss. Therefore, optimizing the operation of transformers is an important topic for energy conservation and emission reduction.

In a substation, transformers may operate in different modes. For example, a transformer may run alone or simultaneously with other transformers. Different modes will result in different amounts of energy consumption. In the prior art, one method for optimizing transformer operations is to firstly plot the curves of all possible operating models and determine the operating models for individual time periods based on the intersection points of the curves. However, this method requires plotting the curves of all possible operating models in advance. In consideration of the cost factors and the limited optimization time domain, repeated switching may occur near an intersection, which will reduce the service life of the transformer and at the same time increase power consumption.

Summary of the Invention

To solve the technical problems stated above, the present invention provides a method and an apparatus for optimizing the operation of a transformer substation to reduce the energy consumption during the operation of the substation and improve the intelligence and flexibility of the operation of the substation.

To achieve the above purpose, the present invention proposes a method for optimizing the operation of a transformer substation, the transformer substation comprising a plurality of transformers, the transformers being connected or disconnected by means of switches, and the optimization method comprising: acquiring a current load of each of the plurality of transformers, and predicting predicted loads of each of the transformers in various possible operating modes in a plurality of time periods based on the current load; calculating transformer costs of each of the transformers in the plurality of time periods based on the predicted loads of each of the transformers, the transformer costs comprising transformer losses and transformer operation costs; calculating switch costs in the plurality of time periods based on a purchase cost and a service life of a switch corresponding to each of the transformers; calculating a total cost in a total time period based on the transformer costs and the switch costs, optimizing the total cost to obtain optimization parameters, and operating the transformer substation according to the optimization parameters, the total time period consisting of the plurality of time periods. To this end, predicted loads of the transformers are predicted based on the current loads, the total cost in the total time period is calculated based on the transformer costs and the switch costs, and the total cost is optimized to obtain optimization parameters, which can be applied to the global time dimension without calculating the threshold in advance, thus preventing repeated switching of the operating modes near the threshold, eliminating the increase in losses and energy consumption due to unnecessary operations, reducing the operation loss and the energy usage costs, and improving the operation accuracy.

In one embodiment of the present invention, the following formulas are used to calculate the transformer costs of the transformers in the plurality of time periods based on the predicted loads of each of the transformers:

$$Cost\_trans_i = \sum_{t=1}^{T} Co\_trans_{i,t} \quad \#(1)$$

$$Co\_trans_{i,t} = Loss\_trans_{i,t} + Op\_trans_{i,t} \quad \#(2)$$

$$Loss\_trans_{i,t} = P0_t + K_Q * Q0_t + Load_i^2 * (Pk_t + K_Q * Qk_t) * \left(\frac{D_t}{S_t}\right)^2 \quad \#(3)$$

$$D_t = \frac{\frac{S_t}{D_t} * Trans_{i,t}}{\sum_{t=1}^{T} \frac{S_t}{D_t} * Trans_{i,t}} \quad \#(4)$$

$$Op\_trans_{i,t} = Trans_{i,t} * (Pf_t + Pu_t) \quad \#(5)$$

In the formulas, $Cost\_trans_i$ represents the transformer costs in the $i$th time period, $Co\_trans_{i,t}$ represents the transformer costs of the $t$th transformer in the $i$th time period, $Loss\_trans_{i,t}$ represents the loss of the $t$th transformer in the $i$th time period, $Op\_trans_{i,t}$ represents the operation costs of the $t$th transformer in the $i$th time period, $P0_t$ represents the active power of the $t$th transformer without load, $K_Q$ represents the reactive power equivalent coefficient, $Q0_t$ represents the reactive power of the $t$th transformer without load, $Load_i$ represents the predicted load in the $i$th time period, $Pk_t$ represents the active power of the $t$th transformer when shorted, $Qk_t$ represents the reactive power of the $t$th transformer when shorted, $D_t$ represents the load factor of the $t$th transformer, $S_t$ represents the rated power of the $t$th transformer, $Transit$ represents whether the $t$th transformer is online in the $i$th time period, $Pf_t$ represents the power consumption of the cooling device of the $t$th transformer, and $Pu_t$ represents the power consumption of the oil-immersed pump of the $t$th transformer. Therefore, a method for calculating transformer costs is provided.

In one embodiment of the present invention, the following formulas are used to calculate the switch costs in the plurality of time periods based on the purchase cost and service life of the switch corresponding to each of the transformers:

$$Cost\_breaker_i = \sum_{n=1}^{N} Co\_breaker_{i,n} \quad \#(6)$$

$$Co\_breaker_{i,n} = Br_{i,n} * \frac{1}{L_n} * C\_breaker_n \quad \#(7)$$

In the formulas, $Cost\_breaker_i$ represents the switch costs in the $i$th time period, $Co\_breaker_{i,n}$ represents the switch costs of the $n$th switch in the $i$th time period, $Br_{i,n}$ represents whether the $n$th switch is on in the $i$th time period, $L_n$ represents the service life of the $n$th switch, and $C\_breaker_n$ represents the purchase cost of the $n$th switch. Therefore, a method for calculating switch costs is provided.

In one embodiment of the present invention, the following formulas are used to calculate the total cost in the total time period based on the transformer costs and the switch costs and optimize the total cost to obtain optimization parameters:

$$Cost_i = Cost\_breaker_i + Cost\_trans_i \quad \#(8)$$

$$\mathrm{Min}(\int_{i=1}^{F} dt * Cost_i) \quad \#(9)$$

$$Pl_{i,t} \leq Ps_t \quad \#(10)$$

$$Pl_{i,1} + Pl_{i,2} + \cdots + Pl_{i,t} = Load_i \quad \#(11)$$

$$\sum_{t=1}^{T}(Trans_{i,t} - Trans_{i-1,t}) \leq 1 \quad \#(12)$$

In the formulas, formula (9) is an objective function, formulas (10) to (12) are constraints, $Cost_i$ represents the total cost in the $i$th time period, $F$ represents the total time period, $Pl_{i,t}$ represents the current power consumption of the $t$th transformer in the $i$th time period, $Ps_t$ represents the rated power consumption of the $t$th transformer, $Transit$ represents whether the $t$th transformer is online in the $i$th time period, and $Trans_{i-1,t}$ represents whether the $t$th transformer is online in the $(i-1)$th time period. Therefore, an algorithm for optimizing transformer operation is provided.

In one embodiment of the present invention, the method further comprises: calculating power reliability costs based on the predicted loads of each of the transformers, and calculating the total cost based on the transformer costs, the switch costs and the power reliability costs. Therefore, the reliability cost is considered and added as a factor to improve the accuracy of transformer operation.

In one embodiment of the present invention, the following formula is used to calculate the power reliability cost based on the predicted loads of each of the transformers:

$$Cost\_other_i = \frac{1}{10\sum_{t=1}^{T} Trans_{i,t}} * Load_i \quad (13)$$

In the formula, $Cost\_other_i$ represents the power reliability cost, $Transit$ represents whether the $t$th transformer is online in the $i$th time period, and $Load_i$ represents the predicted load in the $i$th time period. Therefore, a method for calculating power reliability costs is provided.

The present invention also proposes an apparatus for optimizing the operation of a transformer substation, the transformer substation comprising a plurality of transformers, the transformers being connected or disconnected by means of switches, characterized in that the optimization apparatus comprises: a predicting module that acquires a current load of each of the plurality of transformers and predicts predicted loads of each of the transformers in various possible operating modes in a plurality of time periods based on the current load; a first calculating module that calculates transformer costs of each of the transformers in the plurality of time periods based on the predicted loads of each of the transformers, the transformer costs comprising transformer losses and transformer operation costs; a second calculating module that calculates switch costs in the plurality of time periods based on a purchase cost and a service life of a switch corresponding to each of the transformers; and an optimizing module that calculates a total cost in a total time period based on the transformer costs and the switch costs, optimizes the total cost to obtain optimization parameters, and operates a transformer substation according to the optimization parameters, the total time period consisting of the plurality of time periods.

In one embodiment of the present invention, the following formulas are used to calculate the transformer costs of each of the transformers in the plurality of time periods based on the predicted loads of each of the transformers:

$$Cost\_trans_i = \sum_{t=1}^{T} Co\_trans_{i,t} \quad \#(1)$$

$$Co\_trans_{i,t} = Loss\_trans_{i,t} + Op\_trans_{i,t} \quad \#(2)$$

$$Loss\_trans_{i,t} = P0_t + K_Q * Q0_t + Load_i^2 * (Pk_t + K_Q * Qk_t) * \left(\frac{D_t}{S_t}\right)^2 \quad \#(3)$$

$$D_t = \frac{\frac{S_t}{D_t} * Trans_{i,t}}{\sum_{t=1}^{T} \frac{S_t}{D_t} * Trans_{i,t}} \quad \#(4)$$

$$Op\_trans_{i,t} = Trans_{i,t} * (Pf_t + Pu_t) \quad \#(5)$$

In the formuals, $Cost\_trans_i$ represents the transformer costs in the $i$th time period, $Co\_trans_{i,t}$ represents the transformer costs of the $t$th transformer in the $i$th time period, $Loss\_trans_{i,t}$ represents the loss of the $t$th transformer in the $i$th time period, $Op\_trans_{i,t}$ represents the operation costs of the $t$th transformer in the $i$th time period, $P0t$ represents the active power of the $t$th transformer without load, $K_Q$ represents the reactive power equivalent coefficient, $Q0_t$ represents the reactive power of the $t$th transformer without load, $Load_i$ represents the predicted load in the $i$th time period, $Pk_t$ represents the active power of the $t$th transformer when shorted, $Qk_t$ represents the reactive power of the $t$th transformer when shorted, $D_t$ represents the load factor of the $t$th transformer, $S_t$ represents the rated power of the $t$th transformer, $Transit$ represents whether the $t$th transformer is online in the $i$th time period, $Pf_t$ represents the power consumption of the cooling device of the $t$th transformer, and $Pu_t$ represents the power consumption of the oil-immersed pump of the $t$th transformer.

In one embodiment of the present invention, the following formulas are used to calculate the switch costs in the plurality of time periods based on the purchase cost and service life of the switch corresponding to each of the transformers:

$$Cost\_breaker_i = \sum_{n=1}^{N} Co\_breaker_{i,n} \quad \#(6)$$

$$Co\_breaker_{i,n} = Br_{i,n} * \frac{1}{L_n} * C\_breaker_n \quad \#(7)$$

In the formulas, $Cost\_breaker_i$ represents the switch costs in the $i$th time period, $Co\_breaker_{i,n}$ represents the switch costs of the $n$th switch in the $i$th time period, $Br_{i,n}$ represents whether the $n$th switch is on in the $i$th time period, $L_n$ represents the service life of the $n$th switch, and $C\_breaker_n$ represents the purchase cost of the $n$th switch.

In one embodiment of the present invention, the following formulas are used to calculate the total cost in the total time period based on the transformer costs and the switch costs and optimize the total cost to obtain optimization parameters:

$$Cost_i = Cost\_breaker_i + Cost\_trans_i \quad \#(8)$$

$$\mathrm{Min}(\int_{i=1}^{F} dt * Cost_i) \quad \#(9)$$

$$Pl_{i,t} \leq Ps_t \quad \#(10)$$

$$Pl_{i,1} + Pl_{i,2} + \cdots + Pl_{i,t} = Load_i \quad \#(11)$$

$$\sum_{t=1}^{T}(Trans_{i,t} - Trans_{i-1,t}) \leq 1 \quad \#(12)$$

In the formulas, formula (9) is an objective function, formulas (10) to (12) are constraints, $Cost_i$ represents the total cost in the $i$th time period, $F$ represents the total time period, $Pl_{i,t}$ represents the current power consumption of the $t$th transformer in the $i$th time period, $Ps_t$ represents the rated power consumption of the $t$th transformer, $Transit$ represents whether the $t$th transformer is online in the $i$th time period, and $Trans_{i-1,t}$ represents whether the $t$th transformer is online in the $(i-1)$th time period.

In one embodiment of the present invention, the apparatus further comprises: calculating power reliability costs based on the predicted loads of each of the transformers, and calculating the total cost based on the transformer costs, the switch costs and the power reliability costs.

In one embodiment of the present invention, the following formula is used to calculate the power reliability cost based on the predicted loads of each of the transformers:

$$Cost\_other_i = \frac{1}{10\sum_{t=1}^{T} Trans_{i,t}} * Load_i \quad (13)$$

In the formula, $Cost\_other_i$ represents the power reliability cost, $Transit$ represents whether the $t$th transformer is online in the $i$th time period, and $Load_i$ represents the predicted load in the $i$th time period.

The present invention also proposes an electronic device, comprising a processor, a memory and an instruction stored in the memory, wherein the instruction, when executed by the processor, implements the method as described above.

The present invention also proposes a computer-readable storage medium, with a computer instruction stored thereon, which, when run, executes the method as described above.

Description of the Drawings

The following drawings are only intended to illustrate and explain the present invention schematically, and do not limit the scope of the present invention. In the drawings:

Figure 1 is a schematic diagram of the transformer operation modes in the prior art;
Figure 2 is a flowchart of a method for optimizing the operation of a transformer substation according to one embodiment of the present invention;
Figure 3 is a schematic diagram of an apparatus for optimizing the operation of a transformer substation according

5

to one embodiment of the present invention;
Figure 4 is a schematic diagram of an electronic device according to one embodiment of the present invention.

Reference numerals in the drawings

200 Method for optimizing the operation of a transformer substation
210-240 steps
300 apparatus for optimizing the operation of a transformer substation
310 predicting module
320 first calculating module
330 second calculating module
340 optimizing module
400 electronic device
410 processor
420 memory

Specific Embodiments

To enable a clearer understanding of the technical features, objectives and effects of the present invention, some specific embodiments of the present invention will be described below by referring to the drawings.

In the following description, many specific details are provided to facilitate a full understanding of the present invention. However, the present invention may also be implemented in other ways different from those described herein. Therefore, the present invention is not limited to the specific embodiments disclosed below.

As shown in the application and the claims, unless the context clearly dictates otherwise, terms "a", "an", "one" and/or "the" are not intended to be specific in the singular and may include the plural. Generally, terms "comprising" and "including" only imply that the clearly identified steps and elements are included, these steps and elements do not constitute an exclusive list, and the method or device may also include other steps or elements.

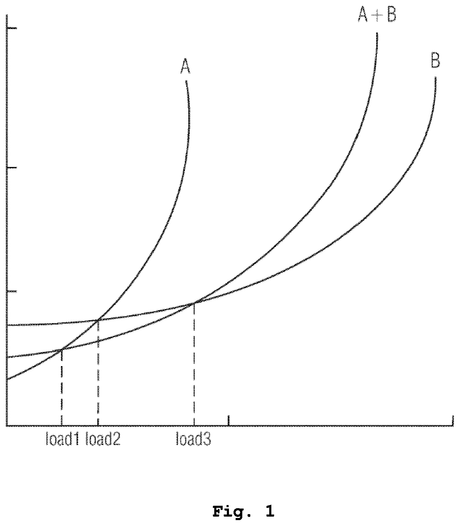

Figure 1 is a schematic diagram of the transformer operation modes in the prior art, comprising two transformers, transformer A and transformer B. The two transformers have three operating modes, i.e., transformer A running alone, transformer B running alone, and transformers A and B running simultaneously. The operation curves of the three operating modes are respectively plotted. As shown in Figure 1, the abscissa is the load current of transformer A, in amps, and the ordinate is the overall energy consumption, in voltamperes. The three operation curves have three intersection points, namely loadi, $load_2$ and loads. When the real-time load current is less than loadi, the overall energy consumption is the lowest if transformer A runs alone. When the real-time load is between loadi and loads, the overall energy consumption is the lowest if transformers A and B run simultaneously. When the real-time load current is greater than loads, the overall energy consumption is the lowest if transformer B runs alone. With this method, the curves of all possible operating models need to be plotted in advance, the cost factors and optimization time domain to be considered are limited, repeated switching may occur near the intersection points, which will shorten the service life of the transformers and at the same time increase power consumption.

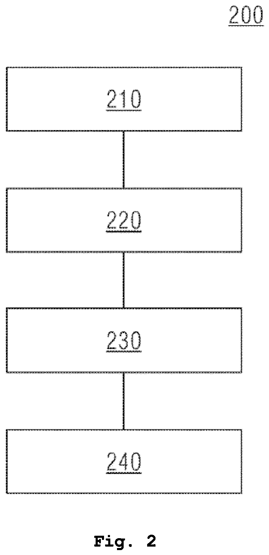

The present invention proposes a method for optimizing the operation of a transformer substation, the transformer substation comprising a plurality of transformers, the transformers being connected or disconnected by means of switches. Figure 2 is a flowchart of the method 200 for optimizing the operation of a transformer substation according to one embodiment of the present invention. The optimization method 200 comprises:
Step 210, acquiring a current load of each of the plurality of transformers, and predicting predicted loads of each of the transformers in various possible operating modes in a plurality of time periods based on the current load.

A neural network model may be trained first based on historical load data to predict each load and the total load of the substation. That is, the predicted loads of each transformer in a plurality of time periods may be calculated in each operating mode. For example, a substation comprises four transformers A, B, C, and D, with four operating modes, namely the first operating mode (with transformers ABC running), the second operating mode (with transformers ACD running), the third operating mode (with transformers ABD running), and the fourth operating mode (with transformers ABCD running). The current loads of the four transformers are acquired, and, based on the current loads, loads of each of the transformers are predicted, from the first operating mode to the fourth operating mode, at the first 15 minutes, the second 15 minutes, the third 15 minutes, and so on.

Step 220, calculating transformer costs of each of the transformers in the plurality of time periods based on the predicted loads of each of the transformers, the transformer costs comprising transformer losses and transformer operation costs.

The costs of a transformer are related to the load, and the costs of each transformer in a plurality of time periods can be calculated based on the predicted loads of each transformer. Transformer costs comprise transformer losses and transformer operation costs. Transformer losses refer to the losses caused to a transformer itself when the transformer is running and can be calculated based on the predicted loads. Transformer operation costs refer to the costs of cooling and pumping a transformer while it is in operation.

In some embodiments, formulas (1) to (5) below are used to calculate the transformer costs of each of the transformers in the plurality of time periods based on the predicted loads of each of the transformers:

$$Cost\_trans_i = \sum_{t=1}^{T} Co\_trans_{i,t} \quad \#(1)$$

$$Co\_trans_{i,t} = Loss\_trans_{i,t} + Op\_trans_{i,t} \quad \#(2)$$

$$Loss\_trans_{i,t} = P0_t + K_Q * Q0_t + Load_i^2 * (Pk_t + K_Q * Qk_t) * (\frac{D_t}{S_t})^2 \quad \#(3)$$

$$D_t = \frac{\frac{S_t}{D_t} * Trans_{i,t}}{\sum_{t=1}^{T} \frac{S_t}{D_t} * Trans_{i,t}} \quad \#(4)$$

$$Op\_trans_{i,t} = Trans_{i,t} * (Pf_t + Pu_t) \quad \#(5)$$

In the formulas, $Cost\_trans_i$ represents the transformer costs in the $i$th time period, $Co\_trans_{i,t}$ represents the transformer costs of the $t$th transformer in the $i$th time period, $Loss\_trans_{i,t}$ represents the loss of the $t$th transformer in the $i$th time period, $Op\_trans_{i,t}$ represents the operation costs of the $t$th transformer in the $i$th time period, P0t represents the active power of the $t$th transformer without load, $K_Q$ represents the reactive power equivalent coefficient, $Q0_t$ represents the reactive power of the $t$th transformer without load, $Load_i$ represents the predicted load in the $i$th time period, $Pk_t$ represents the active power of the tth transformer when shorted, $Qk_t$ represents the reactive power of the tth transformer when shorted, $D_t$ represents the load factor of the $t$th transformer, $S_t$ represents the rated power of the $t$th transformer, $Transit$ represents whether the $t$th transformer is online in the $i$th time period, $Pf_t$ represents the power consumption of the cooling device of the $t$th transformer, and $Pu_t$ represents the power consumption of the oil-immersed pump of the $t$th transformer.

Step 230, calculating switch costs in the plurality of time periods based on a purchase cost and a service life of a switch corresponding to each of the transformers.

A transformer is connected or disconnected by means of switches, i.e., connected to or disconnected from the power grid by means of switches. Switch costs refer to the costs of connecting a transformer to the power grid or disconnecting it from the power grid by means of switches. These costs are related to the purchase cost and service life of the switches, and therefore the switch costs in a plurality of time periods can be calculated based on the purchase cost and service life of the switch corresponding to each transformer.

In some embodiments, formulas (6) and (7) below are used to calculate the switch costs in the plurality of time periods based on the purchase cost and service life of the switch corresponding to each of the transformers:

$$Cost\_breaker_i = \sum_{n=1}^{N} Co\_breaker_{i,n} \quad \#(6)$$

$$Co\_breaker_{i,n} = Br_{i,n} * \frac{1}{L_n} * C\_breaker_n \quad \#(7)$$

In the formulas, $Cost\_breaker_i$ represents the switch costs in the $i$th time period, $Co\_breaker_{i,n}$ represents the switch costs of the $n$th switch in the $i$th time period, $Br_{i,n}$ represents whether the $n$th switch is ON in the $i$th time period, with 1 representing ON and 0 representing OFF, $L_n$ represents the service life of the $n$th switch, and $C\_breaker_n$ represents the purchase cost of the $n$th switch.

| $Trans_{i,t}$ | $Br_{i,1}$ | $Br_{i,2}$ |
|---|---|---|
| 0 | 0 | 0 |
| 1 | 1 | 1 |

The table above shows one possible relationship among the ON value Transit of a transformer, the ON value $Br_{i,1}$ of the upstream switch of the transformer, and the ON value $Br_{i,2}$ of the downstream switch. As shown in the table above, when the transformer is offline, both the upstream and the downstream switches are OFF, and, when the transformer is online, both the upstream and the downstream switches are ON.

Step 240, calculating a total cost in a total time period based on the transformer costs and the switch costs, optimizing the total cost to obtain optimization parameters, and operating the transformer substation according to the optimization parameters, the total time period consisting of the plurality of time periods.

Specifically, after calculating the transformer costs and switching costs, the total cost in a total time period consisting of a plurality of time periods can be calculated by summing up the transformer costs and the switching costs. For example, the total costs in the first 15 minutes, the second 15 minutes, the third 15 minutes and so on until the 24th hour can be calculated respectively, and the sum of the total costs in these time periods is the total cost in the total time period. The total cost is a function of the transformer operating mode in the plurality of time periods. The corresponding transformer operation model when the total cost is minimized can be determined by optimizing the function of the total cost, i.e., solving the total cost function to obtain the optimal solution, for example, the total cost of the transformers reaching the lowest when transformers 1 to 4 run during the first hour, transformers 2 to 6 run during the second hour, etc. This operation mode can minimize the total cost of the transforms. After the optimization parameters are obtained, they are sent to an executor for execution.

In some embodiments, formulas (8) to (12) below are used to calculate the total cost in the total time period based on the transformer costs and the switch costs and optimize the total cost to obtain optimization parameters:

$$Cost_i = Cost\_breaker_i + Cost\_trans_i \quad \#(8)$$

$$\text{Min}(\int_{i=1}^{F} dt * Cost_i) \quad \#(9)$$

$$Pl_{i,t} \leq Ps_t \quad \#(10)$$

$$Pl_{i,1} + Pl_{i,2} + \cdots + Pl_{i,t} = Load_i \quad \#(11)$$

$$\sum_{t=1}^{T}(Trans_{i,t} - Trans_{i-1,t}) \leq 1 \quad \#(12)$$

In the formulas, formula (9) is an objective function, formulas (10) to (12) are constraints, $Cost_i$ represents the total cost in the $i$th time period, $F$ represents the total time period, $Pl_{i,t}$ represents the current power consumption of the $t$th transformer in the $i$th time period, $Ps_t$ represents the rated power consumption of the $t$th transformer, $Trans_{i,t}$ represents whether the $t$th transformer is online in the $i$th time period, and $Trans_{i-1,t}$ represents whether the $t$th transformer is online in the *(i-1)*th time period.

In some embodiments, the method further comprises: calculating power reliability costs based on the predicted loads of each of the transformers, and calculating the total cost based on the transformer costs, the switch costs and the power reliability costs.

In some embodiments, the following formula is used to calculate the power reliability cost based on the predicted loads of each of the transformers:

$$Cost\_other_i = \frac{1}{10 \sum_{t=1}^{T} Trans_{i,t}} * Load_i \quad (13)$$

In the formula, $Cost\_other_i$ represents the power reliability cost, $Trans_{i,t}$ represents whether the tth transformer is online in the $i$th time period, and $Load_i$ represents the predicted load in the $i$th time period.

The embodiments of the present invention provide a method for optimizing the operation of a transformer substation. Predicted loads of each transformer are predicted based on current loads, the total cost in the total time period is calculated based on the transformer costs and the switch costs, and the total cost is optimized to obtain optimization parameters, which can be applied to the global time dimension without calculating the threshold in advance, thus preventing repeated switching of the operating modes near the threshold, eliminating the increase in losses and energy consumption due to unnecessary operations, reducing the operation loss and the energy usage costs, and improving the operation accuracy.

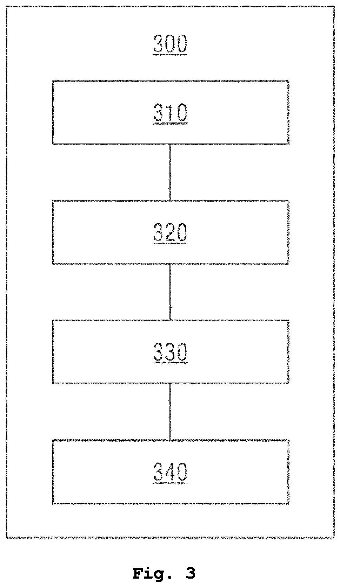

The present invention also proposes an apparatus for optimizing the operation of a transformer substation, the transformer substation comprising a plurality of transformers, the transformers being connected or disconnected by means of switches. Figure 3 is a schematic diagram of the apparatus 300 for optimizing the operation of a transformer substation according to one embodiment of the present invention. As shown in Figure 3, the optimization apparatus 300 comprises:

a predicting module 310 that acquires a current load of each of the plurality of transformers and predicts predicted loads of each of the transformers in various possible operating modes in a plurality of time periods based on the current load,

a first calculating module 320 that calculates transformer costs of each of the transformers in the plurality of time periods based on the predicted loads of each of the transformers, the transformer costs comprising transformer losses and transformer operation costs,

a second calculating module 330 that calculates switch costs in the plurality of time periods based on a purchase cost and a service life of a switch corresponding to each of the transformers, and

an optimizing module 440 that calculates a total cost in a total time period based on the transformer costs and the switch costs, optimizes the total cost to obtain optimization parameters, and operates the transformer substation according to the optimization parameters, the total time period consisting of the plurality of time periods.

In some embodiments, the following formulas are used to calculate the transformer costs of each of the transformers in the plurality of time periods based on the predicted loads of each of the transformers:

$$Cost\_trans_i = \sum_{t=1}^{T} Co\_trans_{i,t} \quad \#(1)$$

$$Co\_trans_{i,t} = Loss\_trans_{i,t} + Op\_trans_{i,t} \quad \#(2)$$

$$Loss\_trans_{i,t} = P0_t + K_Q * Q0_t + Load_i^2 * (Pk_t + K_Q * Qk_t) * \left(\frac{D_t}{S_t}\right)^2 \quad \#(3)$$

$$D_t = \frac{\frac{S_t}{D_t} * Trans_{i,t}}{\sum_{t=1}^{T} \frac{S_t}{D_t} * Trans_{i,t}} \quad \#(4)$$

$$Op\_trans_{i,t} = Trans_{i,t} * (Pf_t + Pu_t) \quad \#(5)$$

In the formulas, $Cost\_trans_i$ represents the transformer costs in the $i$th time period, $Co\_trans_{i,t}$ represents the transformer costs of the $t$th transformer in the $i$th time period, $Loss\_trans_{i,t}$ represents the loss of the $t$th transformer in the $i$th time period, $Op\_trans_{i,t}$ represents the operation costs of the $t$th transformer in the $i$th time period, $P0_t$ represents the active power of the $t$th transformer without load, $K_Q$ represents the reactive power equivalent coefficient, $Q0_t$ represents the reactive power of the $t$th transformer without load, $Load_i$ represents the predicted load in the $i$th time period, $Pk_t$ represents the active power of the $t$th transformer when shorted, $Qk_t$ represents the reactive power of the $t$th transformer when shorted, $D_t$ represents the load factor of the $t$th transformer, $S_t$ represents the rated power of the $t$th transformer, $Trans_{i,t}$ represents whether the $t$th transformer is online in the $i$th time period, $Pf_t$ represents the power consumption of the cooling device of the $t$th transformer, and $Pu_t$ represents the power consumption of the oil-immersed pump of the $t$th transformer.

In some embodiments, the following formulas are used to calculate the switch costs in the plurality of time periods based on the purchase cost and service life of the switch corresponding to each of the transformers:

$$Cost\_breaker_i = \sum_{n=1}^{N} Co\_breaker_{i,n} \quad \#(6)$$

$$Co\_breaker_{i,n} = Br_{i,n} * \frac{1}{L_n} * C\_breaker_n \quad \#(7)$$

In the formulas, $Cost_{breaker_i}$ represents the switch costs in the $i$th time period, $Co\_breaker_{i,n}$ represents the switch costs of the $n$th switch in the $i$th time period, $Br_{i,n}$ represents whether the $n$th switch is on in the $i$th time period, $L_n$ represents the service life of the $n$th switch, and $C\_breaker_n$ represents the purchase cost of the $n$th switch.

In some embodiments, the following formulas are used to calculate the total cost in the total time period based on the transformer costs and the switch costs and optimize the total cost to obtain optimization parameters:

$$Cost_i = Cost\_breaker_i + Cost\_trans_i \quad \#(8)$$

$$\text{Min}(\int_{i=1}^{F} dt * Cost_i) \quad \#(9)$$

$$Pl_{i,t} \le Ps_t \quad \#(10)$$

$$Pl_{i,1} + Pl_{i,2} + \cdots + Pl_{i,t} = Load_i \quad \#(11)$$

$$\sum_{t=1}^{T}(Trans_{i,t} - Trans_{i-1,t}) \le 1 \quad \#(12)$$

In the formulas, formula (9) is an objective function, formulas (10) to (12) are constraints, $Cost_i$ represents the total cost in the $i$th time period, $F$ represents the total time period, $Pl_{i,t}$ represents the current power consumption of the $t$th transformer in the $i$th time period, Pst represents the rated power consumption of the $t$th transformer, Transit represents whether the $t$th transformer is online in the $i$th time period, and $Trans_{i-1,t}$ represents whether the $t$th transformer is online in the $(i-1)$th time period.

In some embodiments, the apparatus further comprises: calculating power reliability costs based on the predicted loads of each of the transformers, and calculating the total cost based on the transformer costs, the switch costs and the power reliability costs.

In some embodiments, the following formula is used to calculate the power reliability cost based on the predicted loads of each of the transformers:

$$Cost\_other_i = \frac{1}{10 \sum_{t=1}^{T} Trans_{i,t}} * Load_i \quad (13)$$

In the formula, $Cost\_other_i$ represents the power reliability cost, Transit represents whether the $t$th transformer is online in the $i$th time period, and $Load_i$ represents the predicted load in the $i$th time period.

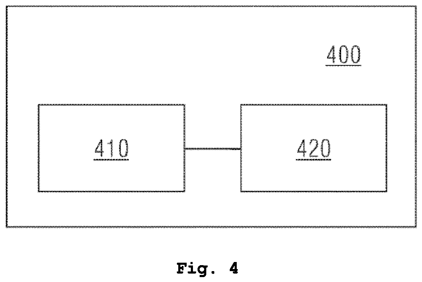

The present invention also provides an electronic device 400. Figure 4 is a schematic diagram of an electronic device 400 according to one embodiment of the present invention. As shown in Figure 4, the electronic device 400 comprises a processor 410 and a memory 420, with an instruction stored in the memory 420, wherein the instruction, when executed by the processor 410, implements the method 200 as described above.

The present invention also provides a computer-readable storage medium, with a computer instruction stored therein, which, when run, executes the method 200 as described above.

Some aspects of the method and the device of the present invention may be implemented entirely by hardware or entirely by software (including firmware, resident software, microcode, etc.), or by a combination thereof. The above hardware or software may be referred to as a "data block", "module", "engine", "unit", "component" or "system". The processor may be one or more application-specific integrated circuits (ASICs), digital signal processors (DSPs), digital signal processing devices (DAPDs), programmable logic devices (PLDs), field-programmable gate arrays (FPGAs), processors, controllers, microcontrollers, microprocessors, or a combination thereof. In addition, all aspects of the present invention may be embodied as a computer product comprising computer-readable program code in one or more computer-readable media. For example, the computer-readable media may include but are not limited to magnetic storage devices (for example, hard disks, floppy disks, magnetic tapes, ...), optical disks (for example, compact discs (CDs), digital versatile disks (DVDs), ...), and smart cards and flash memory devices (for example, cards, sticks, key drives, ...).

Flowcharts are used herein to illustrate the operations performed by the method according to the embodiments of the present application. It should be understood that these operations are not necessarily performed exactly in the order shown. Instead, the various steps may be processed in the reverse order or simultaneously. At the same time, other operations may be added to these processes, or a step or some steps may be removed from these processes.

It should be understood that, although this description is given to the various embodiments, not each embodiment contains only one independent technical solution. This way of description is only for clarity, and those skilled in the art should regard the description as a whole. The technical solutions in each embodiment can also be appropriately combined to form other implementations that can be understood by those skilled in the art.

The statements above are only illustrative specific embodiments of the present invention and are not intended to limit the scope of the present invention. Any equivalent changes, modifications and combinations made by anyone skilled in the art without departing from the concept and principle of the present invention shall fall within the scope of the present invention.

**Claims**

1. A method (200) for optimizing operation of a transformer substation, the transformer substation comprising a plurality of transformers, the transformers being connected or disconnected by means of switches, **characterized in that** the optimization method (200) comprises:

   acquiring a current load of each of the plurality of transformers, and predicting predicted loads of each of the transformers in various possible operating modes in a plurality of time periods based on the current load (210); calculating transformer costs of each of the transformers in the plurality of time periods based on the predicted loads of each of the transformers, the transformer costs comprising transformer losses and transformer operation costs (220); calculating switch costs in the plurality of time periods based on a purchase cost and a service life of a switch corresponding to each of the transformers (230); and calculating a total cost in a total time period based on the transformer costs and the switch costs, optimizing the total cost to obtain optimization parameters, and operating the transformer substation according to the optimization parameters, the total time period consisting of the plurality of time periods (240).

2. The optimization method (200) as claimed in claim 1, **characterized in that** the following formulas are used to calculate transformer costs of each of the transformers in the plurality of time periods based on the predicted loads of each of the transformers:

$$Cost\_trans_i = \sum_{t=1}^{T} Co\_trans_{i,t} \quad \#(1)$$

$$Co\_trans_{i,t} = Loss\_trans_{i,t} + Op\_trans_{i,t} \quad \#(2)$$

$$Loss\_trans_{i,t} = P0_t + K_Q * Q0_t + Load_i^2 * (Pk_t + K_Q * Qk_t) * (\frac{D_t}{S_t})^2 \quad \#(3)$$

$$D_t = \frac{\frac{S_t}{D_t} * Trans_{i,t}}{\sum_{t=1}^{T} \frac{S_t}{D_t} * Trans_{i,t}} \quad \#(4)$$

$$Op\_trans_{i,t} = Trans_{i,t} * (Pf_t + Pu_t) \quad \#(5)$$

wherein $Cost\_trans_i$ represents the transformer costs in the $i$th time period, $Co\_trans_{i,t}$ represents the transformer costs of the $t$th transformer in the $i$th time period, $Loss\_trans_{i,t}$ represents the loss of the $t$th transformer in the $i$th time period, $Op\_trans_{i,t}$ represents the operation costs of the $t$th transformer in the $i$th time period, $P0_t$ represents the active power of the $t$th transformer without load, $K_Q$ represents the reactive power equivalent coefficient, $Q0_t$ represents the reactive power of the $t$th transformer without load, $Load_i$ represents the predicted load in the $i$th time period, $Pk_t$ represents the active power of the $t$th transformer when shorted, $Qk_t$ represents the reactive power of the $t$th transformer when shorted, $D_t$ represents the load factor of the $t$th transformer, $S_t$ represents the rated power of the $t$th transformer, $Trans_{i,t}$ represents whether the $t$th transformer is online in the $i$th time period, $Pf_t$ represents the power consumption of the cooling device of the $t$th transformer, and Put represents the power consumption of the oil-immersed pump of the $t$th transformer.

3. The optimization method (200) as claimed in claim 2, **characterized in that** the following formulas are used to calculate switch costs in the plurality of time periods based on a purchase cost and a service life of a switch corresponding to each of the transformers:

$$Cost\_breaker_i = \sum_{n=1}^{N} Co\_breaker_{i,n} \quad \#(6)$$

$$Co\_breaker_{i,n} = Br_{i,n} * \frac{1}{L_n} * C\_breaker_n \quad \#(7)$$

wherein $Cost\_breaker_i$ represents the switch costs in the ith time period, $Co\_breaker{i,n}$ represents the switch costs of the $n$th switch in the $i$th time period, $Br{i,n}$ represents whether the $n$th switch is ON in the $i$th time period, $L_n$ represents the service life of the $n$th switch, and $C\_breaker_n$ represents the purchase cost of the $n$th switch.

4. The optimization method (200) as claimed in claim 1, **characterized in that** the following formulas are used to calculate a total cost in a total time period based on the transformer costs and the switch costs and optimize the total cost to obtain optimization parameters:

$$Cost_i = Cost\_breaker_i + Cost\_trans_i \quad \#(8)$$

$$\text{Min}\left(\int_{i=1}^{F} dt * Cost_i\right) \quad \#(9)$$

$$Pl_{i,t} \leq Ps_t \quad \#(10)$$

$$Pl_{i,1} + Pl_{i,2} + \cdots + Pl_{i,t} = Load_i \quad \#(11)$$

$$\sum_{t=1}^{T}(Trans_{i,t} - Trans_{i-1,t}) \leq 1 \quad \#(12)$$

wherein formula (9) is an objective function, formulas (10) to (12) are constraints, $Cost_i$ represents the total cost in the $i$th time period, $F$ represents the total time period, $Pl_{i,t}$ represents the current power consumption of the $t$th transformer in the $i$th time period, $Ps_t$ represents the rated power consumption of the $t$th transformer, $Transit$ represents whether the tth transformer is online in the $i$th time period, and $Trans_{i-1,t}$ represents whether the $t$th transformer is online in the $(i-1)$th time period.

5. The optimization method (200) as claimed in claim 1, **characterized in that** the method (200) further comprises: calculating power reliability costs based on the predicted loads of each of the transformers, and calculating the total cost based on the transformer costs, the switch costs and the power reliability costs.

6. The optimization method (200) as claimed in claim 5, **characterized in that** the following formula is used to calculate power reliability costs based on the predicted loads of each of the transformers:

$$Cost\_other_i = \frac{1}{10 \sum_{t=1}^{T} Trans_{i,t}} * Load_i \qquad (13)$$

wherein $Cost\_other_i$ represents the power reliability cost, $Transit$ represents whether the $t$th transformer is online in the $i$th time period, and $Load_i$ represents the predicted load in the $i$th time period.

7. An apparatus (300) for optimizing operation of a transformer substation, the transformer substation comprising a plurality of transformers, the transformers being connected or disconnected by means of switches, **characterized in that** the optimization apparatus (300) comprises:

   a predicting module (310) that acquires a current load of each of the plurality of transformers and predicts predicted loads of each of the transformers in various possible operating modes in a plurality of time periods based on the current load;
   a first calculating module (320) that calculates transformer costs of each of the transformers in the plurality of time periods based on the predicted loads of each of the transformers, the transformer costs comprising transformer losses and transformer operation costs;
   a second calculating module (330) that calculates switch costs in the plurality of time periods based on a purchase cost and a service life of a switch corresponding to each of the transformers; and
   an optimizing module (340) that calculates a total cost in a total time period based on the transformer costs and the switch costs, optimizes the total cost to obtain optimization parameters, and operates a transformer substation according to the optimization parameters, the total time period consisting of the plurality of time periods.

8. The optimization apparatus (300) as claimed in claim 7, **characterized in that** the following formulas are used to calculate transformer costs of each of the transformers in the plurality of time periods based on the predicted loads of each of the transformers:

$$Cost\_trans_i = \sum_{t=1}^{T} Co\_trans_{i,t} \quad \#(1)$$

$$Co\_trans_{i,t} = Loss\_trans_{i,t} + Op\_trans_{i,t} \quad \#(2)$$

$$Loss\_trans_{i,t} = P0_t + K_Q * Q0_t + Load_i^2 * (Pk_t + K_Q * Qk_t) * (\frac{D_t}{S_t})^2 \quad \#(3)$$

$$D_t = \frac{\frac{S_t}{D_t} * Trans_{i,t}}{\sum_{t=1}^{T} \frac{S_t}{D_t} * Trans_{i,t}} \quad \#(4)$$

$$Op\_trans_{i,t} = Trans_{i,t} * (Pf_t + Pu_t) \quad \#(5)$$

wherein $Cost\_trans_i$ represents the transformer costs in the $i$th time period, $Co\_trans_{i,t}$ represents the transformer costs of the $t$th transformer in the $i$th time period, $Loss\_trans_{i,t}$ represents the loss of the $t$th transformer in the $i$th time period, $Op\_trans_{i,t}$ represents the operation costs of the $t$th transformer in the $i$th time period, $P0_t$ represents the active power of the $t$th transformer without load, $K_Q$ represents the reactive power equivalent coefficient, $Q0_t$ represents the reactive power of the $t$th transformer without load, $Load_i$ represents the predicted load in the $i$th time period, $Pk_t$ represents the active power of the $t$th transformer when shorted, $Qk_t$ represents the reactive power of the $t$th transformer when shorted, $D_t$ represents the load factor of the $t$th transformer, $S_t$ represents the rated power of the $t$th transformer, $Trans_{i,t}$ represents whether the $t$th transformer is online in the $i$th time period, $Pf_t$ represents the power consumption of the cooling device of the $t$th transformer, and $Pu_t$ represents the power consumption of the oil-immersed pump of the $t$th transformer.

9. The optimization apparatus (300) as claimed in claim 8, **characterized in that** the following formulas are used to calculate switch costs in the plurality of time periods based on a purchase cost and a service life of a switch corresponding to each of the transformers:

$$Cost\_breaker_i = \sum_{n=1}^{N} Co\_breaker_{i,n} \quad \#(6)$$

$$Co\_breaker_{i,n} = Br_{i,n} * \frac{1}{L_n} * C\_breaker_n \quad \#(7)$$

wherein $Cost\_breaker_i$ represents the switch costs in the $i$th time period, $Co\_breaker_{i,n}$ represents the switch costs of the $n$th switch in the $i$th time period, $Br_{i,n}$ represents whether the $n$th switch is ON in the $i$th time period, $L_n$ represents the service life of the $n$th switch, and $C\_breaker_n$ represents the purchase cost of the $n$th switch.

10. The optimization apparatus (300) as claimed in claim 7, **characterized in that** the following formulas are used to calculate a total cost in a total time period based on the transformer costs and the switch costs and optimize the total cost to obtain optimization parameters:

$$Cost_i = Cost\_breaker_i + Cost\_trans_i \quad \#(8)$$

$$\text{Min}(\int_{i=1}^{F} dt * Cost_i) \quad \#(9)$$

$$Pl_{i,t} \leq Ps_t \quad \#(10)$$

$$Pl_{i,1} + Pl_{i,2} + \cdots + Pl_{i,t} = Load_i \quad \#(11)$$

$$\sum_{t=1}^{T}(Trans_{i,t} - Trans_{i-1,t}) \leq 1 \quad \#(12)$$

wherein formula (9) is an objective function, formulas (10) to (12) are constraints, $Cost_i$ represents the total cost in the $i$th time period, $F$ represents the total time period, $Pl_{i,t}$ represents the current power consumption of the $t$th transformer in the $i$th time period, $Ps_t$ represents the rated power consumption of the $t$th transformer, $Trans_{i,t}$ represents whether the $t$th transformer is online in the $i$th time period, and $Trans_{i-1,t}$ represents whether the $t$th transformer is online in the $(i-1)$th time period.

11. The optimization apparatus (300) as claimed in claim 7, **characterized in that** the apparatus (300) further comprises: calculating power reliability costs based on the predicted loads of each of the transformers, and calculating the total cost based on the transformer costs, the switch costs and the power reliability costs.

12. The optimization apparatus (300) as claimed in claim 11, **characterized in that** the following formula is used to calculate power reliability costs based on the predicted loads of each of the transformers:

$$Cost\_other_i = \frac{1}{10\sum_{t=1}^{T}Trans_{i,t}} * Load_i \quad (13)$$

wherein $Cost\_other_i$ represents the power reliability cost, $Trans_{i,t}$ represents whether the $t$th transformer is online in the $i$th time period, and $Load_i$ represents the predicted load in the $i$th time period.

13. An electronic device (400), comprising a processor (410), a memory (420) and an instruction stored in the memory (420), wherein the instruction, when executed by the processor (410), implements the method as claimed in any of claims 1 to 6.

14. A computer-readable storage medium, with a computer instruction stored thereon, which, when run, executes the method as claimed in any of claims 1 to 6.

Fig. 1

200

```
┌─────────────────────────┐
│          210            │
└─────────────────────────┘
             │
┌─────────────────────────┐
│          220            │
└─────────────────────────┘
             │
┌─────────────────────────┐
│          230            │
└─────────────────────────┘
             │
┌─────────────────────────┐
│          240            │
└─────────────────────────┘
```

Fig. 2

Fig. 3

Fig. 4

## INTERNATIONAL SEARCH REPORT

| International application No. |
|---|
| **PCT/CN2021/109874** |

**A. CLASSIFICATION OF SUBJECT MATTER**

H02J 3/00(2006.01)i; G06Q 10/04(2012.01)i

According to International Patent Classification (IPC) or to both national classification and IPC

**B. FIELDS SEARCHED**

Minimum documentation searched (classification system followed by classification symbols)

H02J; G06Q

Documentation searched other than minimum documentation to the extent that such documents are included in the fields searched

Electronic data base consulted during the international search (name of data base and, where practicable, search terms used)

CNTXT; CNABS; DWPI; WPABS; ENTXTC; USTXT; CNKI; IEEE: 变压器, 优化, 预测, 负载, 负荷, 成本, 损耗, transformer, optimization, prediction, load, cost, loss

**C. DOCUMENTS CONSIDERED TO BE RELEVANT**

| Category* | Citation of document, with indication, where appropriate, of the relevant passages | Relevant to claim No. |
|---|---|---|
| Y | 寇凌峰等 (KOU, Lingfeng et al.). "计及负荷增长风险的配电变压器选型方法 (A Type Selection Method for Distribution Transformers Considering Risk of Load Growth)" 电网技术 (*Power System Technology*), Vol. 39, No. 5, 31 May 2015 (2015-05-31), ISSN: 1000-3673, pp. 1384-1389 | 1, 5, 7, 11, 13, 14 |
| Y | CN 111260152 A (CHANGSHA UNIVERSITY OF SCIENCE AND TECHNOLOGY) 09 June 2020 (2020-06-09) description, paragraphs 0055-0109, and figures 1-3 | 1, 5, 7, 11, 13, 14 |
| A | CN 110807538 A (NORTH CHINA ELECTRIC POWER UNIVERSITY) 18 February 2020 (2020-02-18) entire document | 1-14 |
| A | CN 102244384 A (JIYUAN POWER SUPPLY CO., LTD. OF HENAN ELECTRIC POWER CORP.) 16 November 2011 (2011-11-16) entire document | 1-14 |
| A | CN 108805310 A (SUWEN ELECTRIC ENERGY TECHNOLOGY CO., LTD.) 13 November 2018 (2018-11-13) entire document | 1-14 |

☑ Further documents are listed in the continuation of Box C.     ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 March 2022** | **25 March 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/109874**

**C.    DOCUMENTS CONSIDERED TO BE RELEVANT**

| Category* | Citation of document, with indication, where appropriate, of the relevant passages | Relevant to claim No. |
|---|---|---|
| A | EP 1788521 A1 (SIEMENS LTDA.) 23 May 2007 (2007-05-23)<br>entire document | 1-14 |

**INTERNATIONAL SEARCH REPORT**
Information on patent family members

International application No.

**PCT/CN2021/109874**

| Patent document cited in search report | | | Publication date (day/month/year) | Patent family member(s) | | | Publication date (day/month/year) |
|---|---|---|---|---|---|---|---|
| CN | 111260152 | A | 09 June 2020 | CN | 111260152 | B | 07 September 2021 |
| CN | 110807538 | A | 18 February 2020 | None | | | |
| CN | 102244384 | A | 16 November 2011 | CN | 102244384 | B | 02 October 2013 |
| CN | 108805310 | A | 13 November 2018 | None | | | |
| EP | 1788521 | A1 | 23 May 2007 | None | | | |

Form PCT/ISA/210 (patent family annex) (January 2015)